# EUROPEAN PATENT SPECIFICATION

(11) **EP 4 124 463 B1**
(45) Date of publication and mention of the grant of the patent: **04.09.2024**
(21) Application number: 22187303.7
(22) Date of filing: 27.07.2022
(51) Int. Cl.: B41M 5/00, B41J 2/21, C09D 11/54

(54) **IMAGE PRINTING METHOD, IMAGE PRINTING APPARATUS, AND PRINTED MATTER**
BILDDRUCKVERFAHREN, BILDDRUCKVORRICHTUNG UND BEDRUCKTES MATERIAL
PROCÉDÉ D'IMPRESSION D'IMAGES, APPAREIL D'IMPRESSION D'IMAGES ET MATIÈRE IMPRIMÉE

(30) Priority: 30.07.2021 JP 2021126255; 25.05.2022 JP 2022085414
(43) Date of publication of application: 01.02.2023
(73) Proprietor: Ricoh Company, Ltd., Tokyo 143-8555 (JP)
(72) Inventor: Yamamoto, Sei, Tokyo, 143-8555 (JP); Umemura, Kazuhiko, Tokyo, 143-8555 (JP); Hirokawa, Yuya, Tokyo, 143-8555 (JP); Hagiwara, Hiroki, Tokyo, 143-8555 (JP); Saiga, Takuya, Tokyo, 143-8555 (JP); Tamura, Risa, Tokyo, 143-8555 (JP)
(74) Representative: Marks & Clerk LLP

(56) References cited:
- US-A1- 2020 276 849

## Description

### BACKGROUND

### Technical Field

The present disclosure relates to an image printing method, an image printing apparatus, and a printed matter.

### Description of the Related Art

In recent years, inkjet printers have been used not only for home use, but also for inkjet image formation on materials that are used as packages for foods, beverages, and daily necessities. Examples of print media for packaging use include paper containers, seal labels, cardboard, and soft packages.

In the packaging use, processing fluids containing resins are often applied on print media in order to protect the surfaces of the print media and improve glossiness of the print media.

The processing fluid may be applied all over the print media or may be applied on part of the print media. This processing fluid applying treatment can express a gloss value difference between the region to which the processing fluid is applied and the region to which the processing fluid is not applied. Therefore, a printed matter having a high beauty property can be obtained.

For this treatment, a proposed method applies a first processing fluid containing a resin to a print medium, applies second resin particles free of a resin to the print medium after applying the first processing fluid, and controls the gloss value of a coating film of an inkjet ink through a fixing step using a heating pressurizing roller (for example, see JP-2019-142190-A).

US 2020/276849 A1 discloses a method for producing printed matter that includes applying a pretreatment liquid containing a resin and a pretreatment liquid containing a coagulant to a substrate.

### SUMMARY

The invention is set out in the appended claims.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic view of an image printing apparatus of the present disclosure used in an image printing method of the present disclosure;
FIG. 2A is a schematic view of a first image forming apparatus of an image printing apparatus of the present disclosure used in an image printing method of the present disclosure;
FIG. 2B is a schematic view of a second image forming apparatus of an image printing apparatus of the present disclosure used in an image printing method of the present disclosure;
FIG. 3A is a schematic view of a printed matter obtained by an image printing method of the present disclosure; and
FIG. 3B is a schematic view of a printed matter obtained by an image printing method of the present disclosure.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity.

### (Image printing method and image printing apparatus)

An image printing method of the present disclosure includes a first processing fluid applying step and a second processing fluid applying step, preferably includes a drying step, and further includes other steps as needed.

An image printing apparatus of the present disclosure includes a first processing fluid applying unit and a second processing fluid applying unit, preferably includes a drying unit, and further includes other units as needed.

The image printing method of the present disclosure can be suitably performed by the image printing apparatus of the present disclosure. The first processing fluid applying step can be performed by the first processing fluid applying unit. The second processing fluid applying step can be performed by the second processing fluid applying unit. The drying step can be performed by the drying unit. The other steps can be performed by the other units.

An existing technique (for example, see JP-2019-142190-A) proposes a method for improving glossiness by applying a first processing fluid and softening or melting a resin contained in the processing fluid using a heating pressurizing roller as a fixing device, and for obtaining releasability of the heating pressurizing roller by applying a second processing fluid containing particles to a layer overlying above an ink layer. However, the method has a problem that a printed matter having a high beauty property cannot be obtained because the second processing fluid is free of a resin emulsion containing an anionic functional group and cannot generate a gloss value difference between the region to which the first processing fluid is applied and a region to which the first processing fluid is not applied.

In the present disclosure, a second processing fluid containing a resin emulsion containing an anionic functional group is applied after a first processing fluid containing a multivalent metal salt is applied. As a result, in a predetermined region to which the first processing fluid is applied, the multivalent metal salt and the resin emulsion react with each other and the resin emulsion flocculates, to reduce the gloss value. This generates a gloss value difference between the predetermined region to which the first processing fluid is applied and any other region to which the first processing fluid is not applied, making it possible to obtain a printed matter having a high beauty property.

In the present disclosure, the multivalent metal salt contained in the first processing fluid and the resin emulsion containing an anionic functional group contained in the second processing fluid act in a manner that an electrolytic ion of the multivalent metal salt contained in the first processing fluid reduces the repulsive force of the resin emulsion particles contained in the second processing fluid and collapses the stably dispersed state of the resin emulsion particles, to flocculate the resin emulsion containing the anionic functional group and reduce the gloss value of the predetermined region to which the first processing fluid is applied.

### <First processing fluid applying step and first processing fluid applying unit>

The first processing fluid applying step is a step of applying a first processing fluid containing a multivalent metal salt to predetermined region of a print medium, and is performed by the first processing fluid applying unit.

The predetermined region is a region of the print medium to which the first processing fluid is applied. The area ratio of the predetermined region is not particularly limited, may be appropriately selected depending on the intended purpose, and is preferably 1% or greater but 95% or less relative to the entire print medium.

A region to which the first processing fluid is not applied may be referred to as any other region.

### «First processing fluid»

The first processing fluid contains a multivalent metal salt, and further contains other components as needed.

The first processing fluid is applied to a predetermined region of a print medium before the second processing fluid is applied.

### -Multivalent metal salt-

The multivalent metal salt is a compound in which a negative ion (anion) and a positive ion (cation) bond with each other by ionic bonding. The multivalent metal salt has a function of reacting with the resin emulsion containing an anionic functional group contained in the second processing fluid to flocculate the resin emulsion and destabilize dispersion of the resin emulsion in the second processing fluid. Flocculation of the resin emulsion reduces the gloss value of the predetermined region to which the first processing fluid is applied.

The positive ion (cation) in the multivalent metal salt is not particularly limited and may be appropriately selected depending on the intended purpose. Examples of the positive ion (cation) include, but are not limited to, aluminum ion (Al³⁺), calcium ion (Ca²⁺), magnesium ion (Mg²⁺), copper ion (Cu²⁺), iron ion (Fe²⁺ or Fe³⁺), zinc ion (Zn²⁺), tin ion (Sn²⁺ or Sn⁴⁺), strontium ion (Sr²⁺), nickel ion (Ni²⁺), cobalt ion (Co²⁺), barium ion (Ba²⁺), lead ion (Pb²⁺), zirconium ion (Zr⁴⁺), titanium ion (Ti⁴⁺), antimony ion (Sb³⁺), bismuth ion (Bi³⁺), tantalum ion (Ta⁵⁺), arsenic ion (As³⁺), cerium ion (Ce³⁺), lanthanum ion (La³⁺), yttrium ion (Y³⁺), mercury ion (Hg²⁺), and beryllium ion (Be²⁺). One of these positive ions may be used alone or two or more of these positive ions may be used in combination. Among these positive ions, calcium ion (Ca²⁺) and magnesium ion (Mg²⁺) are preferable, and calcium ion (Ca²⁺) is more preferable because calcium ion (Ca²⁺) better reduces the gloss value of the predetermined region to which the first processing fluid is applied.

The negative ion (anion) in the multivalent metal salt is not particularly limited and may be appropriately selected depending on the intended purpose. Examples of the negative ion (anion) include, but are not limited to, ions of halogen elements such as fluorine ion (F⁻), chlorine ion (Cl⁻), bromine ion (Br⁻), and iodine ion (I⁻); ion of organic carboxylic acids such as formate ion, acetate ion, lactate ion, malonate ion, oxalate ion, maleate ion, and benzoate ion; ions of organic sulfonic acids such as benzene sulfonate ion, naphthol sulfonate ion, and alkyl benzene sulfonate ion; and thiocyanate ion (SCN⁻), thiosulfate ion (S₂O₃²⁻), phosphate ion (PO₄³⁻), and nitrite ion (NO₂⁻). One of these negative ions may be used alone or two or more of these negative ions may be used in combination.

The multivalent metal salt is not particularly limited and may be appropriately selected depending on the intended purpose. Examples of the multivalent metal salt include, but are not limited to, aluminum chloride, calcium chlorides such as calcium chloride hexahydrate, nickel chlorides such as nickel chloride hexahydrate, , calcium acetates such as calcium acetate monohydrate, magnesium acetate such as magnesium acetate tetrahydrate, aluminum nitrates such as aluminum nitrate nonahydrate, magnesium nitrate, magnesium chloride, calcium nitrate such as calcium nitrate tetrahydrate, magnesium hydroxide, aluminum sulfate, magnesium sulfates such as magnesium sulfate anhydrous, and ammonium alum. One of these multivalent metal salts may be used alone or two or more of these multivalent metal salts may be used in combination. Among these multivalent metal salts, calcium acetate is preferable.

The content of the multivalent metal salt is preferably 4% by mass or greater but 25% by mass or less and more preferably 7% by mass or greater but 25% by mass or less relative to the total amount of the first processing fluid. When the content of the multivalent metal salt is 4% by mass or greater, the multivalent metal salt can suitably react with the resin emulsion contained in the second processing fluid. When the content of the multivalent metal salt is 25% by mass or less, the multivalent metal salt has a high storage stability and it is possible to suppress occurrence of quality failure such as precipitation of the multivalent metal salt.

The amount of the multivalent metal salt attached on the region to which the first processing fluid is applied is preferably 0.4 g/m² or greater, more preferably 0.4 g/m² or greater but 2.4 g/m² or less, and particularly preferably 0.8 g/m² or greater but 1.2 g/m² or less. When the amount of the multivalent metal salt attached is 0.4 g/m² or greater, it is possible to reduce the gloss value of the predetermined region to which the first processing fluid is applied.

The amount of the multivalent metal salt attached can be measured by a method of calculating the amount of the multivalent metal salt attached, from the weight (g/m²) of the first processing fluid applied, weighed by a precision balance, and the content (% by weight) of the multivalent metal salt in the processing fluid.

### -Other components-

Examples of the other components include, but are not limited to, a resin, an organic solvent, water, a surfactant, a defoaming agent, a preservative and a fungicide, a corrosion inhibitor, and a pH regulator.

### --Resin--

The resin is not particularly limited and may be appropriately selected depending on the intended purpose. Examples of the resin include, but are not limited to, cationic polymer latex resins, anionic polymer latex resins, and nonionic polymer latex resins. One of these resins may be used alone or two or more of these resins may be used in combination. Among these resins, nonionic polymer latex resins are preferable because of an excellent storage stability without flocculation or gelation.

The latex resin in the polymer latex resin represents a dispersion liquid (emulsion) in which resin particles having a nano-order particle size distribution are stably dispersed in a solution.

The first processing fluid containing the resin can better improve density and scratch resistance.

The nonionic polymer latex resin represents resin particles that can disperse without utilizing charges, but by steric repulsion through neutralization of an acidic or basic functional group. Specifically, the nonionic polymer latex resin represents a liquid composition containing solid resin particles from which a monomer containing an acidic functional group such as a carboxyl group and a sulfo group or a basic functional group such as an amino group is not detected when the solid resin particles are subjected to pyrolysis GC-MS (e.g., GC-17A available from Shimadzu Corporation) after isolated from the liquid composition by centrifugation.

The chemical structure of the resin is not particularly limited and may be appropriately selected depending on the intended purpose. For example, at least one or more selected from the group consisting of acrylic resins, polyolefin resins, polyvinyl acetate resins, polyvinyl chloride resins, urethane resins, and copolymers of these resins are preferable because a strong adhesiveness with various base materials can be obtained.

The glass transition temperature (Tg) of the resin is not particularly limited and may be appropriately selected depending on the intended purpose so long as adhesiveness with a print medium and a drying property can be maintained, and is preferably -25 degrees C or higher but 70 degrees C or lower. When the glass transition temperature of the resin is -25 degrees C or higher, stickiness of the surface of a print medium and blocking between overlaid print media can be suppressed. When the glass transition temperature of the resin is 70 degrees C or lower, it is possible to maintain adhesiveness between the processing fluid and a print medium and prevent cracking or peeling of the printed image during folding and bending processes in a box making step.

The content of the resin is preferably 30% by mass or less relative to the total amount of the processing fluid. When the content of the resin is 30% by mass or less, the resin is not excessively thick when the processing fluid is applied, occurrence of blocking is suppressed, and the effect of the multivalent metal salt is sufficiently expressed.

### --Organic solvent--

The organic solvent is not particularly limited and may be appropriately selected depending on the intended purpose. Examples of the organic solvent include, but are not limited to, ethers such as polyol alkylethers and polyol aryl ethers, polyols, nitrogen-containing heterocyclic compounds, amides, amines, and sulfur-containing compounds. It is preferable that the organic solvent have a function as a humectant.

Specific examples of the organic solvents include, but are not limited to, polyols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butane triol, 1,2,3-butanetriol, 2,2,4-trimethyl-1,3-pentanediol, and petriol; polyol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether; polyol aryl ethers such as ethylene glycol monophenylether and ethylene glycol monobenzylether; nitrogen-containing heterocyclic compounds such as 2-pyrolidone, N-methyl-2-pyrolidone, N-hydroxyethyl-2-pyrolidone, 1,3-dimethyl-2-imidazolidinone, ε-caprolactam, and y-butyrolactone; amides such as formamide, N-methylformamide, N,N-dimethylformamide, 3-methoxy-N,N-dimethyl propionamide, and 3-butoxy-N,N-dimethyl propionamide; amines such as monoethanolamine, diethanolamine, and triethylamine; sulfur-containing compounds such as dimethyl sulfoxide, sulfolane, and thiodiethanol; propylene carbonate, and ethylene carbonate.

Since the water-soluble organic solvent serves as a humectant and also imparts a good drying property, it is preferable to use an organic solvent having a boiling point of 250 degrees C or lower.

The content of the organic solvent is not particularly limited, may be appropriately selected depending on the intended purpose, and is preferably 5% by mass or greater but 90% by mass or less and more preferably 10% by mass or greater but 70% by mass or less relative to the first processing fluid in terms of, for example, applicability on a print medium, uniform dispersibility, and a drying property.

### --Water--

The water is not particularly limited and may be appropriately selected depending on the intended purpose. Examples of the water include, but are not limited to, pure water such as ion-exchanged water, ultrafiltrated water, reverse osmotic water, and distilled water, and ultrapure water. One of these kinds of water may be used alone or two or more of these kinds of water may be used in combination.

The content of the water is not particularly limited and may be appropriately selected depending on the intended purpose. For example, a sufficient amount that does not cause precipitation of the multivalent metal salt during storage at normal temperature is preferable.

### --Surfactant--

The surfactant provides the first processing fluid with a low surface tension, and an improved wettability and a uniform applicability on various kinds of print media, and has an effect of enabling the multivalent metal salt contained in the first processing fluid to be uniformly distributed on a print medium.

The surfactant is not particularly limited and may be appropriately selected depending on the intended purpose. Examples of the surfactant include, but are not limited to, silicone-based surfactants, fluorosurfactants, amphoteric surfactants, nonionic surfactants, anionic surfactants, etc. One of these surfactants may be used alone or two or more of these surfactants may be used in combination.

The silicone-based surfactant has no specific limit and can be suitably selected to suit to a particular application. Of these, preferred are silicone-based surfactants which are not decomposed even in a high pH environment. Specific examples thereof include, but are not limited to, side-chain-modified polydimethylsiloxane, both end-modified polydimethylsiloxane, one-end-modified polydimethylsiloxane, and side-chain-both-end-modified polydimethylsiloxane. A silicone-based surfactant having a polyoxyethylene group or a polyoxyethylene polyoxypropylene group as a modifying group is particularly preferable because such an agent demonstrates good characteristics as an aqueous surfactant. It is possible to use a polyether-modified silicone-based surfactant as the silicone-based surfactant. A specific example thereof is a compound in which a polyalkylene oxide structure is introduced into the side chain of the Si site of dimethyl siloxane.

The fluorosurfactant has no specific limit and can be suitably selected to suit to a particular application. For example, perfluoroalkyl sulfonic acid compounds, perfluoroalkyl carboxylic acid compounds, perfluoroalkyl phosphoric acid ester compounds, adducts of perfluoroalkyl ethylene oxide, and polyoxyalkylene ether polymer compounds having a perfluoroalkyl ether group in its side chain are particularly preferable because they do not foam easily.

Specific examples of the perfluoroalkyl sulfonic acid compounds include, but are not limited to, perfluoroalkyl sulfonic acid and salts of perfluoroalkyl sulfonic acid.

Specific examples of the perfluoroalkyl carboxylic acid compounds include, but are not limited to, perfluoroalkyl carboxylic acid and salts of perfluoroalkyl carboxylic acid.

Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain and salts of polyoxyalkylene ether polymers having a perfluoroalkyl ether group in its side chain.

Counter ions of salts in these fluorine-based surfactants are, for example, Li, Na, K, NH₄, NH₃CH₂CH₂OH, NH₂(CH₂CH₂OH)₂, and NH(CH₂CH₂OH)₃.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides, etc.

Specific examples of the anionic surfactants include, but are not limited to, polyoxyethylene alkyl ether acetates, dodecyl benzene sulfonates, laurates, and polyoxyethylene alkyl ether sulfates.

The silicone-based surfactants have no particular limit and can be suitably selected to suit to a particular application. Specific examples thereof include, but are not limited to, side-chain-modified polydimethyl siloxane, both end-modified polydimethylsiloxane, one-end-modified polydimethylsiloxane, and side-chain-both-end-modified polydimethylsiloxane. In particular, a polyether-modified silicone-based surfactant having a polyoxyethylene group or a polyoxyethylene polyoxypropylene group as a modifying group is particularly preferable because such a surfactant demonstrates good characteristics as an aqueous surfactant.

Any suitably synthesized surfactant and any product thereof available on the market is suitable. Products available on the market are obtained from Byk Chemie Japan Co., Ltd., Shin-Etsu Chemical Co., Ltd., Dow Corning Toray Silicone Co., Ltd., NIHON EMULSION Co., Ltd., Kyoeisha Chemical Co., Ltd., etc.

The polyether-modified silicone-containing surfactant has no particular limit and can be suitably selected to suit to a particular application. Examples thereof include, but are not limited to, a compound in which the polyalkylene oxide structure represented by the following general formula (S-1) is introduced into the side chain of the Si site of dimethyl polysiloxane.

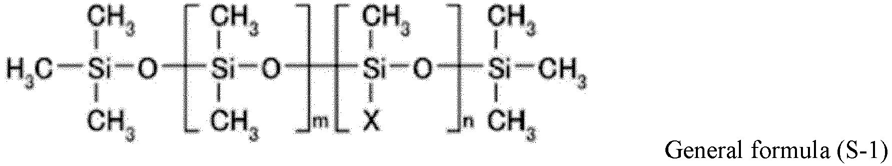

X = -R(C₂H₄O)ₐ (C₃H₆O)_{b} R'

In the general formula (S-1), "m", "n", "a", and "b" each, respectively represent integers, R represents an alkylene group, and R' represents an alkyl group.

Any suitably synthesized polyether-modified silicone-containing surfactant and any product thereof available on the market is suitable. Specific examples of polyether-modified silicone-based surfactants include, but are not limited to, KF-618, KF-642, and KF-643 (all manufactured by Shin-Etsu Chemical Co., Ltd.), EMALEX SS-5602 and EMALEX SS-1906EX (both manufactured by NIHON EMULSION Co., Ltd.), DOWSIL FZ-2105, DOWSIL FZ-2118, DOWSIL FZ-2154, DOWSIL FZ-2161, DOWSIL FZ-2162, DOWSIL FZ-2163, and DOWSIL FZ-2164 (all manufactured by Dow Corning Toray Silicone Co., Ltd.), BYK-33 and BYK-387 (both manufactured by Byk Chemie Japan Co., Ltd.), and TSF4440, TSF4452, and TSF4453(all manufactured by Momentive Performance Materials Japan Inc.).

The fluorosurfactant has no particular limit and can be suitably selected to suit to a particular application. A fluorosurfactant in which the number of carbon atoms replaced with fluorine atoms is from 2 to 16 and more preferably from 4 to 16 is preferable.

Specific examples of the fluorosurfactants include, but are not limited to, perfluoroalkyl phosphoric acid ester compounds, adducts of perfluoroalkyl ethylene oxide, and polyoxyalkylene ether polymer compounds having a perfluoroalkyl ether group in its side chain. Of these, polyoxyalkylene ether polymer compounds having a perfluoroalkyl ether group in its side chain are preferable because they do not foam easily and the fluorosurfactant represented by the following general formula (F-1) or general formula (F-2) is more preferable.

**CF₃CF₂(CF₂CF2)ₘ- CH₂CH₂O (CH₂CH₂O)ₙH** General formula (F-1)

In the general formula (F-1), "m" is preferably 0 or an integer of from 1 to 10 and "n" is preferably 0 or an integer of from 1 to 40 in order to provide water solubility.

**CₙF₂ₙ₊₁-CH₂CH(OH)CH₂-O-(CH₂CH₂O)ₐ-Y** General formula (F-2)

In the general formula (F-2), Y represents H, CₘF₂ₘ₊₁, where "m" is an integer of from 1 to 6, CH₂CH(OH)CH₂-C_{q}F_{2q+1}, where q represents an integer of from 4 to 6, or CₚH₂ₚ₊₁, where p represents an integer of from 1 to 19, "n" represents an integer of from 1 to 6, and "a" represents an integer of from 4 to 14.

Any suitably synthesized fluorosurfactant and any product thereof available on the market is suitable. Specific examples of the products available on the market include, but are not limited to, SURFLON (registered trademark) S-111, S-112, S-113, S-121, S-131, S-132, S-141, and S-145 (all manufactured by AGC Seimi Chemical Co., Ltd.); FLUORAD FC-93, FC-95, FC-98, FC-129, FC-135, FC-170C, FC-430, and FC-431 (all manufactured by SUMITOMO 3M); MEGAFAC F-470, F-1405, and F-474 (all manufactured by DIC CORPORATION); ZONYL (registered trademark) TBS, FSP, FSA, FSN-100, FSN, FSO-100, FSO, FS-300, UR, CAPSTONE FS-30, FS-31, FS-3100, FS-34, and FS-35 (all manufactured by DuPont K.K.); FT-110, FT-250, FT-251, FT-4005, FT-150, and FT-400SW (all manufactured by NEOS COMPANY LIMITED), POLYFOX PF-136A,PF-156A, PF-151N, PF-154, and PF-159 (all manufactured by OMNOVA SOLUTIONS INC.), and UNIDYNE DSN-403N (manufactured by DAIKIN INDUSTRIES). Of these, ZONYL (registered trademark) FS-3100, FS-34, and FS-300 (all manufactured by DuPont K.K.), FT-110, FT-250, FT-251, FT-400S, FT-150, and FT-400SW (all manufactured by NEOS COMPANY LIMITED), POLYFOX PF-151N (manufactured by OMNOVA SOLUTIONS INC.), and UNIDYNE DSN-403N (manufactured by DAIKIN INDUSTRIES) are particularly preferable in terms of good printing quality, coloring in particular, and improvement on permeation, wettability, and uniform dyeing property to paper.

The proportion of the surfactant is not particularly limited and can be suitably selected to suit to a particular application. It is preferably from 0.001 to 5 percent by mass and more preferably from 0.05 to 5 percent by mass in terms of excellent wettability and discharging stability and improvement on image quality.

### --Defoaming agent--

The defoaming agent has no particular limit and can be suitably selected to suit to a particular application. For example, silicone -based defoaming agents, polyether-based defoaming agents, and aliphatic acid ester-based defoaming agents are suitable. These can be used alone or in combination. Of these, silicone-based defoaming agents are preferable to easily break foams.

### --Preservatives and fungicides--

The preservatives and fungicides are not particularly limited and can be suitably selected to suit to a particular application. A specific example is 1,2-benzisothiazoline-3-on.

### --Corrosion inhibitor--

The corrosion inhibitor has no particular limit and can be suitably selected to suit to a particular application. Examples thereof are acid sulfite and sodium thiosulfate.

### --pH regulator--

The pH regulator has no particular limit and can be suitably selected to suit to a particular application. It is preferable to adjust the pH to 7 or higher. Specific examples thereof include, but are not limited to, amines such as diethanol amine and triethanol amine. The pH of the processing fluid is preferably from 7 to 12 and more preferably from 8 to 11 in terms of prevention of corrosion of metal materials contacting the processing fluid.

The viscosity of the first processing fluid is not particularly limited and may be appropriately selected depending on the intended purpose. The viscosity of the first processing fluid at a temperature of 25 degrees C is preferably 5 mPa·s or higher but 1,000 mPa·s or lower.

The viscosity can be measured by, for example, a rotatory viscometer (RE-80L, manufactured by TOKI SANGYO CO., LTD.). The measuring conditions are as follows:
- Standard cone rotor (1°34' x R24)
- Sample liquid amount: 1.2 mL
- Number of rotations: 50 rotations per minute (rpm)
- 25 degrees C
- Measuring time: three minutes

The method for applying the first processing fluid is not particularly limited and may be appropriately selected depending on the intended purpose. Examples of the method include, but are not limited to, an inkjet method, a blade coating method, a gravure coating method, a gravure offset coating method, a bar coating method, a roll coating method, a knife coating method, an air knife coating method, a comma coating method, a U-comma coating method, an AKKU coating method, a smoothing coating method, a microgravure coating method, a reverse roll coating method, a four-roll coating method, a five-roll coating method, a dip coating method, a curtain coating method, a slide coating method, and a die coating method. Among these methods, an inkjet method is preferable.

The application amount of the first processing fluid is not particularly limited and may be appropriately selected depending on the intended purpose. The application amount of the first processing fluid on a print medium is preferably 2 g/m² or greater but 30 g/m² or less, and more preferably 5 g/m² or greater but 20 g/m² or less.

### -Print medium-

The print medium is not particularly limited and may be appropriately selected depending on the intended purpose. Examples of the print medium include, but are not limited to, paper such as high-quality paper, coat paper, art paper, simili paper, thin paper, and cardboard, cloth, films or sheets of polyester resins, acrylic resins, vinyl chloride resins, vinylidene chloride resins, polyvinyl alcohol, polyethylene, polypropylene, polyacrylonitrile, ethylene vinyl acetate copolymers, ethylene vinyl alcohol copolymers, ethylene methacrylic acid copolymers, nylon, polylactic acid, and polycarbonate, OHP sheets, cellophane, aluminum foils, and various kinds of base materials that hitherto have been used as print base materials.

### <Second processing fluid applying step and second processing fluid applying unit>

The second processing fluid applying step is a step of applying a second processing fluid containing a resin emulsion containing an anionic functional group to the predetermined region of the print medium to which the first processing fluid is applied and any other region of the print medium to which the first processing fluid is not applied. The second processing fluid applying step is performed by the second processing fluid applying unit.

### <<Second processing fluid»

The second processing fluid contains a resin emulsion, and further contains other components as needed.

### -Resin emulsion-

The resin emulsion contains a resin containing an anionic functional group.

The anionic functional group is not particularly limited and may be appropriately selected depending on the intended purpose so long as the anionic functional group is anionic and can react with the positive ion of the multivalent metal salt. Examples of the anionic functional group include, but are not limited to, a carboxyl group, a sulfonic acid group, and a phosphoric acid group.

The anionic functional group in the resin emulsion can be identified by, for example, infrared spectroscopy, pyrolytic gas chromatography (PyGC), and a nuclear magnetic resonance method (NMR).

Examples of the resin containing the anionic functional group include, but are not limited to, carboxyl group-containing unsaturated monomers, aromatic ring-containing ethyleny unsaturated monomers, and other co-polymerizable ethyleny unsaturated monomers. Examples of the carboxyl group-containing unsaturated monomers include, but are not limited to, (meth)acrylic acid, itaconic acid, crotonic acid, fumaric acid, maleic anhydride, maleic acid, and maleic acid monoester.

Examples of the aromatic ring-containing ethyleny unsaturated monomers include, but are not limited to, styrene-based monomers such as styrene, α-methyl styrene, vinyl toluene, and derivatives thereof, benzyl (meth)acrylate, and naphthyl (meth)acrylate.

Examples of the other co-polymerizable ethyleny unsaturated monomers include, but are not limited to, methyl (meth)acrylate, ethyl (meth)acrylate, propyl (meth)acrylate, isopropyl (meth)acrylate, butyl (meth)acrylate, hexyl (meth)acrylate, 2-ethylhexyl (meth)acrylate, octyl (meth)acrylate, lauryl (meth)acrylate, stearyl (meth)acrylate, and 2-hydroxystearyl (meth)acrylate.

The resin emulsion containing the anionic functional group may be appropriately synthesized, or a commercially available product may be used.

Examples of the commercially available product include, but are not limited to, JONCRYL 450 (available from BASF GmbH, with a nonvolatile content of 42% and an acid value of 100 mgKOH/g), JONCRYL 60 (available from BASF GmbH, with a nonvolatile content of 34% and an acid value of 215 mgKOH/g), and JONCRYL 352 (available from BASF GmbH, with a nonvolatile content of 45% and an acid value of 53 mgKOH/g).

The acid value of the resin emulsion is not particularly limited, may be appropriately selected depending on the intended purpose, and is preferably 50 mgKOH/g or greater but 300 mgKOH/g or less.

The amount of the resin emulsion attached is not particularly limited and may be appropriately selected depending on the intended purpose. The amount of the resin component in the second processing fluid, attached on the region to which the first processing fluid is applied, is preferably in the range of 0.3 g/m² or greater but 3.0 g/m² or less.

The amount of the resin component attached can be measured by a method of calculating the amount of the resin component attached, from the weight (g/m²) of the second processing fluid applied, weighed by a precision balance, and the content (% by weight) of the resin component contained in the processing fluid.

The amount ratio (A:B) between the attached amount (A) of the multivalent metal salt contained in the first processing fluid and the attached amount (B) of the resin component contained in the second processing fluid is not particularly limited, may be appropriately selected depending on the intended purpose, and is preferably from 1:8 through 8:1 because it is possible to better reduce the gloss value of the predetermined region to which the first processing fluid is applied.

The glass transition temperature (Tg) of the resin emulsion is not particularly limited, may be appropriately selected depending on the intended purpose, and is preferably -10 degrees C or higher but 120 degrees C or lower. When the glass transition temperature of the resin emulsion is -10 degrees C or higher, the second processing fluid can maintain an anti-blocking property. When the glass transition temperature of the resin emulsion is 120 degrees C or lower, cracking of a coating film constituting a layer formed of the second processing fluid can be prevented.

The content of the resin emulsion is not particularly limited, may be appropriately selected depending on the intended purpose, and is preferably 40% by mass or less relative to the total amount of the second processing fluid. When the content of the resin emulsion is 40% by mass or less, the second processing fluid on a printer has an antiskinning effect against moisture evaporation.

The second processing fluid containing the anionic functional group of the present disclosure flocculates and gelates immediately when mixed with the multivalent metal salt. Therefore, the second processing fluid is useless if it is mixed with the multivalent metal salt beforehand. It is necessary to apply the first processing fluid and the second processing fluid using different applying units.

### -Other components-

The second processing fluid of the present disclosure may contain, for example, various kinds of waxes. The wax is not particularly limited and may be appropriately selected depending on the intended purpose. A polyethylene wax is preferable. In addition, the second processing fluid of the present disclosure may further appropriately contain other components depending on the intended use.

As the other components, the second processing fluid may contain, for example, the same components as used in the first processing fluid.

The acid value of the second processing fluid is preferably 20 mgKOH/g or greater but 150 mgKOH/g or less, more preferably 40 mgKOH/g or greater but 150 mgKOH/g or less, and particularly preferably 100 mgKOH/g or greater but 150 mgKOH/g or less. When the acid value of the second processing fluid is 20 mgKOH/g or greater, the second processing fluid can suitably react with the multivalent metal salt contained in the first processing fluid and reduce the gloss value of the predetermined region to which the first processing fluid is applied. When the acid value of the second processing fluid is 150 mgKOH/g or less, the second processing fluid has a good drying property and a good water resistance.

The application amount of the second processing fluid applied is not particularly limited, may be appropriately selected depending on the intended purpose, and is preferably 0.5 g/m² or greater but 5.0 g/m² or less and more preferably 0.8 g/m² or greater but 3.0 g/m² or less on a print medium. When the application amount of the second processing fluid is 0.5 g/m² or greater, a sufficient scratch resistance can be obtained. When the application amount of the second processing fluid is 5.0 g/m² less, blocking tends not to occur between printed matters that are overlaid on each other after the second processing fluid is dried.

It is possible to adjust the viscosity of the second processing fluid by appropriately changing the content of water or a solvent component depending on, for example, the applying method. For example, when using a flexo coater, it is preferable to adjust the viscosity in a manner that the number of seconds taken for the second processing fluid to flow out from a Zahn cup No. 4 is about from 10 seconds through 23 seconds. For example, when using a gravure coater, it is preferable to adjust the viscosity in a manner that the number of seconds taken for the second processing fluid to flow out from a Zahn cup No. 3 is about from 15 seconds through 20 seconds.

In addition to the flexo coater method and the gravure coater method described above, any other method may be appropriately selected as the method for applying the second processing fluid. Examples of the method include, but are not limited to, a doctor chamber method, a blade coating method, a gravure offset coating method, a bar coating method, a roll coating method, a knife coating method, an air knife coating method, a comma coating method, a U-comma coating method, an AKKU coating method, a smoothing coating method, a microgravure coating method, a reverse roll coating method, a four-roll coating method, a five-roll coating method, a dip coating method, a curtain coating method, a slide coating method, and a die coating method.

The second processing fluid may be applied in-line or off-line. "In-line" represents continuous application of the first processing fluid and the second processing fluid using the same printer. "Off-line" includes application of the first processing fluid, subsequently ejecting the print medium and heaping up or winding up the print medium, and subsequently applying the second processing fluid using the same or a different printer.

### <Drying step and drying unit>

The drying step is a step of drying the print medium to which the second processing fluid is applied, and is performed by the drying unit.

The drying unit is not particularly limited and may be appropriately selected depending on the intended purpose. Examples of the drying unit include, but are not limited to, a roll heater, a drum heater, a hot air drying device, an infrared drying device, and an ultraviolet drying device.

The surface temperature of a print medium in the drying step is not particularly limited, may be appropriately selected depending on the intended purpose, and is preferably 50 degrees C or higher and more preferably 60 degrees C or higher but 100 degrees C or lower because a layer formed of the second processing fluid can be dried sufficiently.

The drying time in the drying step is not particularly limited, may be appropriately selected depending on the intended purpose, and is preferably 1 second or longer but shorter than 300 seconds because a layer formed of the second processing fluid can be dried sufficiently.

### <Other steps and other units>

The other steps are not particularly limited and may be appropriately selected depending on the intended purpose. Examples of the other steps include, but are not limited to, an ink applying step.

### «Ink applying step and ink applying unit»

The ink applying step is a step of applying an ink containing a coloring material to form an ink layer, and is performed by an ink applying unit.

The ink is applied to the predetermined region of the print medium to which the first processing fluid is applied or to any other region of the print medium to which the first processing fluid is not applied.

The method for applying the ink is not particularly limited. Examples of the method include, but are not limited to, an inkjet method, a blade coating method, a gravure coating method, a gravure offset coating method, a bar coating method, a roll coating method, a knife coating method, an air knife coating method, a comma coating method, a U-comma coating method, an AKKU coating method, a smoothing coating method, a microgravure coating method, a reverse roll coating method, a four-roll coating method, a five-roll coating method, a dip coating method, a curtain coating method, a slide coating method, and a die coating method. Among these methods, an inkjet method is preferable.

The application amount of the ink is preferably 5 g/m² or greater but 15 g/m² or less and more preferably 7 g/m² or greater but 15 g/m² or less per color in terms of realizing a high image density.

### «Ink»

Examples of the ink include, but are not limited to, color inks, black inks, gray inks, clear inks, metallic inks, and white inks.

Examples of the color inks include, but are not limited to, cyan inks, magenta inks, yellow inks, light cyan inks, light magenta inks, red inks, green inks, blue inks, orange inks, violet inks, and white inks.

The ink contains a coloring material, and further contains other components as needed.

### -Coloring material-

The coloring material is not particularly limited and may be appropriately selected depending on the intended purpose so long as the coloring material develops a color. Examples of the coloring material include, but are not limited to, dyes and pigments. One of these coloring materials may be used alone or two or more of these coloring materials may be used in combination. Among these coloring materials, pigments are preferable.

Examples of the pigments include, but are not limited to, inorganic pigments and organic pigments.

As the inorganic pigments, in addition to calcium carbonate, barium sulfate, aluminum hydroxide, barium yellow, cadmium red, and chrome yellow, carbon black manufactured by known methods such as contact methods, furnace methods, and thermal methods can be used. One of these inorganic pigments may be used alone or two or more of these inorganic pigments may be used in combination.

As the organic pigments, it is possible to use azo pigments (azo lake, insoluble azo pigments, condensed azo pigments, and chelate azo pigments), polycyclic pigments (phthalocyanine pigments, perylene pigments, perinone pigments, anthraquinone pigments, quinacridone pigments, dioxazine pigments, indigo pigments, thioindigo pigments, isoindolinone pigments, and quinophthalone pigments, etc.), dye chelates (basic dye type chelates, acid dye type chelates, etc.), nitro pigments, nitroso pigments, aniline black, and titanium oxide. One of these organic pigments may be used alone or two or more of these organic pigments may be used in combination.

Among these organic pigments, organic pigments that have a good affinity with a solvent are preferable.

Specific examples of the pigments for black include, but are not limited to, carbon black (C.I. Pigment Black 7) such as furnace black, lamp black, acetylene black, and channel black, copper, iron (C.I. Pigment Black 11), and organic pigments such as aniline black (C.I. Pigment Black 1). One of these pigments for black may be used alone or two or more of these pigments for black may be used in combination.

Specific examples of the pigments for color include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, and 155; C.I. Pigment Orange 5, 13, 16, 17, 36, 43, and 51; C.I. Pigment Red 1, 2, 3, 5, 17, 22, 23, 31, 38, 48:2 (Permanent Red 2B(Ca)), 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 185, 190, 193, 209, and 219; C.I. Pigment Violet 1 (Rhodamine Lake), 3, 5:1, 16, 19, 23, and 38; C.I. Pigment Blue 1, 2, 15 (Phthalocyanine Blue), 15:1, 15:2, 15:3 (Phthalocyanine Blue), 16, 17:1, 56, 60, and 63; C.I. Pigment Green 1, 4, 7, 8, 10, 17, 18, and 36; and C.I. Pigment White 6. One of these pigments for color may be used alone or two or more of these pigments for color may be used in combination.

Specific examples of the dye include, but are not limited to, C.I. Acid Yellow 17, 23, 42, 44, 79, and 142; C.I. Acid Red 52, 80, 82, 249, 254, and 289; C.I. Acid Blue 9, 45, and 249; C.I. Acid Black 1, 2, 24, and 94; C.I. Food Black 1, and 2; C.I. Direct Yellow 1, 12, 24, 33, 50, 55, 58, 86, 132, 142, 144, and 173; C.I. Direct Red 1, 4, 9, 80, 81, 225, and 227; C.I. Direct Blue 1, 2, 15, 71, 86, 87, 98, 165, 199, and 202; C.I. Direct Black 19, 38, 51, 71, 154, 168, 171, and 195; C.I. Reactive Red 14, 32, 55, 79, and 249; and C.I. Reactive Black 3, 4, and 35. One of these dyes may be used alone or two or more of these dyes may be used in combination.

The coloring material used in metallic inks is particles obtained by minutely grinding elemental metals, alloys, or metal compounds. Specific examples of the coloring material used in metallic inks include, but are not limited to, coloring materials formed of one or more selected from a group of elemental metals such as aluminum, silver, gold, nickel, chromium, tin, zinc, indium, titanium, silicon, copper, and platinum; and alloys. Examples of the metal compounds include, but are not limited to, one or more selected from oxides, nitrides, sulfides, and carbides of elemental metals or alloys.

The content of the coloring material in the ink is not particularly limited, may be appropriately selected depending on the intended purpose, and is preferably 0.1% by mass or greater but 15% by mass or less and more preferably 1% by mass or greater but 10% by mass or less.

### -Other components-

Examples of the other components include, but are not limited to, a resin, an organic solvent, water, a surfactant, a defoaming agent, a preservative and a fungicide, a corrosion inhibitor, and a pH regulator.

The property of the ink is not particularly limited and can be suitably selected to suit to a particular application. For example, viscosity, surface tension, pH, etc., are preferably in the following ranges.

The viscosity of the ink at 25 degrees C is preferably from 5 to 30 mPa·s and more preferably from 5 to 25 mPa·s to improve print density and text quality and obtain good dischargeability. The viscosity can be measured by, for example, a rotatory viscometer (RE-80L, manufactured by TOKI SANGYO CO., LTD.). The measuring conditions are as follows:
- Standard cone rotor (1°34' x R24)
- Sample liquid amount: 1.2 mL
- Number of rotations: 50 rotations per minute (rpm)
- 25 degrees C
- Measuring time: three minutes

The surface tension of the ink is preferably 35 mN/m or less and more preferably 32 mN/m or less at 25 degrees C in terms that the ink is suitably levelized on a print medium and the drying time of the ink is shortened. The pH of the ink is preferably from 7 to 12 and more preferably from 8 to 11 in terms of prevention of corrosion of metal materials contacting the ink.

### (Printed matter)

A printed matter of the present disclosure includes a print medium, a layer formed of a first processing fluid containing a multivalent metal salt, the layer being on the print medium, and another layer formed of a second processing fluid containing a resin emulsion containing an anionic functional group, the another layer being on a predetermined region on which the first processing fluid is present and on any other region on which the first processing fluid is absent.

As the print medium, the various kinds of paper and base materials described above can be used. The printed matter includes an image that is formed using the first processing fluid and the second processing fluid used in the present disclosure.

It is preferable that the printed matter have a difference of 10 or greater, more preferably 20 or greater, and particularly preferably 30 or greater between the 60° gloss value of the predetermined region on which the first processing fluid is present and the 60° gloss value of the any other region on which the first processing fluid is absent. When the difference is 10 or greater, the printed matter has a high beauty property.

### <Image printing apparatus>

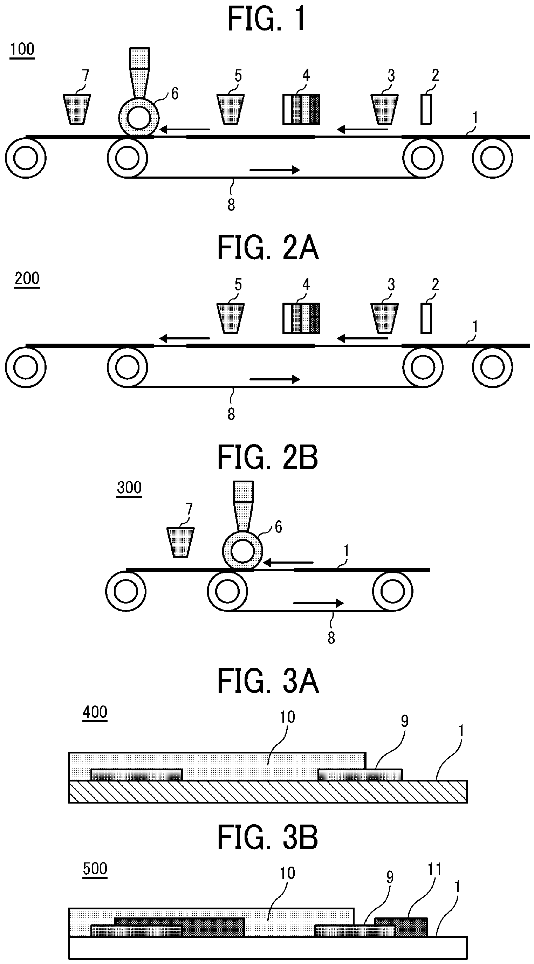

FIG. 1 is a schematic view of an image printing apparatus 100 used in the image printing method of the present disclosure. The image printing apparatus of FIG. 1 includes a first processing fluid discharging head 2 configured to apply the first processing fluid, a first processing fluid drying device 3, ink (color ink) discharging heads 4 configured to discharge a black ink (K), a cyan ink (C), a magenta ink (M), and a yellow ink (Y), an ink drying device 5, a second processing fluid applying device 6 configured to apply the second processing fluid, a second processing fluid drying device 7, and a conveying belt 8 configured to convey a print medium 1.

In FIG. 1, the first processing fluid drying device 3 is installed as needed between the first processing fluid discharging head 2 and the ink discharging heads 4. It is not indispensable to dry a layer formed of the first processing fluid. However, when a print medium is a low-liquid-absorbable base material such as a film, it is preferable to dry a layer formed of the first processing fluid in order to prevent swimming of the first processing fluid or beading of an ink when applied.

Examples of the first processing fluid drying device 3, the ink drying device 5, and the second processing fluid drying device 7 include, but are not limited to, a heating device and a drying device that heat and dry the top surface and the bottom surface of a print medium having an image. For example, a fan heater and an infra-red heater can be used. The print medium can be heated and dried before, during, and after printing.

In FIG. 1, the ink drying device 5 is installed as needed between a yellow ink (Y) discharging head among the ink (color ink) discharging heads 4 and the second processing fluid applying device 6. It is not indispensable to dry an ink layer. However, it is preferable to dry an ink layer in order to prevent back trap during application of the second processing fluid (back trap is a phenomenon that an ink component migrates into the second processing fluid applying device and colors the second processing fluid).

In FIG. 1, the second processing fluid drying device 7 is disposed at the back of the second processing fluid applying device 6, and is indispensable for suitably drying the second processing fluid and preventing blocking.

FIG. 2A and FIG. 2B are schematic views of image printing apparatuses used in the image printing method of the present disclosure when the second processing fluid is applied off-line.

As illustrated in FIG 2A, in a first image printing apparatus 200, a first processing fluid discharging head 2 applies the first processing fluid to a print medium 1, and ink (color ink) discharging heads 4 apply inks to the print medium 1. Subsequently, as illustrated in FIG. 2B, in a second image printing apparatus 300, a second processing fluid applying device 6 applies the second processing fluid to the print medium 1.

In the first printing step of FIG. 2A, a first processing fluid drying device 3 is installed as needed between the first processing fluid discharging head 2 and the ink discharging heads 4. It is not indispensable to dry a layer formed of the first processing fluid. However, when a print medium is a low-liquid-absorbable base material such as a film, it is preferable to dry a first processing fluid layer in order to prevent swimming of the first processing fluid or beading of an ink when applied.

In the first printing step of FIG. 2A, an ink drying device 5 is installed as needed at the back of a yellow ink (Y) discharging head among the ink (color ink) discharging heads 4. It is not indispensable to dry a layer formed of an ink. However, it is preferable to dry a layer formed of an ink in order to prevent backside staining or blocking when a print medium is ejected and heaped up or wound up.

In the second printing step of FIG. 2B, a second processing fluid drying device 7 is disposed at the back of the second processing fluid applying device 6, and is indispensable for suitably drying the second processing fluid and preventing blocking.

FIG. 3A and FIG. 3B are schematic views of printed matter obtained by the image printing apparatus and the image printing method of the present disclosure.

FIG. 3A is a schematic view of a printed matter 400 including no layer formed of an ink. The printed matter includes a print medium 1, a layer 9 formed of the first processing fluid, to which the first processing fluid has been applied, and a layer 10 formed of the second processing fluid, to which the second processing fluid has been applied.

FIG. 3B is a schematic view of a printed matter 500 including a layer formed of an ink. The printed matter includes a print medium 1, a layer 9 formed of the first processing fluid, to which the first processing fluid has been applied, a layer 11 formed of an ink, to which an ink has been applied, and a layer 10 formed of the second processing fluid, to which the second processing fluid has been applied.

In the present disclosure, the first processing fluid layer 9 is applied on a predetermined region of the print medium 1, and the second processing fluid layer 10 is formed to cover both of the region on which the first processing fluid layer 9 is present and a region on which the first processing fluid layer 9 is absent. By combined use of the first processing fluid and the second processing fluid, the gloss value of the second processing fluid layer on the region on which the first processing fluid layer is present is reduced, to generate a gloss value difference from the second processing fluid layer on a region on which the first processing fluid layer is absent, making it possible to obtain a printed matter having an excellent beauty property.

The second processing fluid layer may completely cover the first processing fluid layer or may cover part of the first processing fluid layer. The ink layer may completely cover the first processing fluid layer or may cover part of the first processing fluid layer. The second processing fluid layer may completely cover the ink layer or may cover part of the ink layer.

In addition, the image printing apparatus and the image printing method are not limited to those producing merely meaningful visible images such as texts and figures with the ink. For example, the image printing apparatus and the image printing method can produce patterns like geometric design and 3D images.

In addition, the image printing apparatus includes both a serial type apparatus in which the liquid discharging head is caused to move and a line type apparatus in which the liquid discharging head is not moved, unless otherwise specified.

Furthermore, in addition to the desktop type, this image printing apparatus includes a wide type capable of printing images on a large print medium such as A0, and a continuous printer capable of using continuous paper wound up in a roll form as print media.

Moreover, image forming, recording, printing, etc. in the present disclosure represent the same meaning. Recording media, media, and print media represent the same meaning.

### Examples

The present disclosure will be described below by way of Examples. The present disclosure should not be construed as being limited to these Examples. For example, preparations and evaluations in Examples and Comparative Examples were performed at 25 degrees C at a relative humidity of 60% unless otherwise particularly specified.

### (First processing fluid preparation example 1)

The components presented in [Components of first processing fluid 1] below were mixed, and subsequently stirred using a dissolver (DISPERMAT LC30, obtained from Eko Instruments Co., Ltd.) at 2,000 rpm for 10 minutes, to obtain a first processing fluid 1.

### [Components of first processing fluid 1]

- Magnesium acetate tetrahydrate (multivalent metal salt): 8.0 parts by mass
- 1,2-Propanediol: 10.0 parts by mass
- 3-Methoxybutanol: 10.0 parts by mass
- TEGO (registered trademark) WET270 (silicone-based surfactant, obtained from Evonik Industries AG): 0.5 parts by mass
- PROXEL LV (obtained from Avecia Inc., preservative/fungicide): 0.1 parts by mass
- Ion-exchanged water: 71.4 parts by mass

### (First processing fluid preparation examples 2 to 9)

First processing fluids 2 to 9 were prepared in the same manner as in First processing fluid preparation example 1, except that unlike in First processing fluid preparation example 1, the components and the contents were changed to as presented in Table 1-1 and Table 1-2 below.

**Table 1-1**

| | | First processing fluid 1 | First processing fluid 2 | First processing fluid 3 | First processing fluid 4 | First processing fluid 5 |
|---|---|---|---|---|---|---|
| Multivalent metal salt | Magnesium acetate tetrahydrate | 8.0 | 16.0 | 24.0 | | |
| | Calcium acetate monohydrate | | | | 4.0 | 8.0 |
| | Magnesium sulfate heptahydrate | | | | | |
| Organic solvent | 1,2-Propanediol | 10.0 | 10.0 | 10.0 | 10.0 | 10.0 |
| | 3-Methoxybutanol | 10.0 | 10.0 | 10.0 | 10.0 | 10.0 |
| Surfactant | TEGO WET 270 | 0.5 | 0.5 | 0.5 | 0.5 | 0.5 |
| Preservative /fungicide | PROXEL LV | 0.1 | 0.1 | 0.1 | 0.1 | 0.1 |
| Ion-exchanged water | | 71.4 | 63.4 | 55.4 | 75.4 | 71.4 |
| Total | | 100.0 | 100.0 | 100.0 | 100.0 | 100.0 |

**Table 1-2**

| | | First processing fluid 6 | First processing fluid 7 | First processing fluid 8 | First processing fluid 9 |
|---|---|---|---|---|---|
| Multivalent metal salt | Magnesium acetate tetrahydrate | | | 3.0 | |
| | Calcium acetate monohydrate | 12.0 | | | |
| | Magnesium sulfate heptahydrate | | | | 8.0 |
| Organic solvent | 1,2-Propanediol | 10.0 | 10.0 | 10.0 | 10.0 |
| | 3-Methoxybutanol | 10.0 | 10.0 | 10.0 | 10.0 |
| Surfactant | TEGO WET 270 | 0.5 | 0.5 | 0.5 | 0.5 |
| Preservative /fungicide | PROXEL LV | 0.1 | 0.1 | 0.1 | 0.1 |
| Ion-exchanged water | | 67.4 | 79.4 | 76.4 | 71.4 |
| Total | | 100.0 | 100.0 | 100.0 | 100.0 |

### (Second processing fluid preparation example 1)

The components presented in [Components of second processing fluid 1] below were mixed, and subsequently stirred using a dissolver (DISPERMAT LC30, obtained from Eko Instruments Co., Ltd.) at 2,000 rpm for 10 minutes, to obtain a second processing fluid 1. The acid value of the second processing fluid calculated from the acid value of the resin emulsion was 40.5 mgKOH/g.

### [Components of second processing fluid 1]

JONCRYL 450 (anionic functional group: ethyleny unsaturated group, obtained from BASF GmbH, with a non-volatile content of 42% and an acid value of 100 mgKOH/g): 40.5 parts by mass
- CHEMIPEARL 400W (polyethylene wax, obtained from Mitsui Chemicals, Inc.): 1.0 part by mass
- BYK-028 (defoaming agent, obtained from Byk Chemie Japan Co., Ltd.): 0.5 parts by mass
- Diethylene glycol monobutyl ether acetate: 3.0 parts by mass
- Isopropyl alcohol: 20.0 parts by mass
- Ion-exchanged water: 35.0 parts by mass

### (Second processing fluid preparation examples 2 to 4)

Second processing fluids 2 to 4 were prepared in the same manner as in Second processing fluid preparation example 1, except that unlike in Second processing fluid preparation example 1, the components and the contents were changed to as presented in Table 2 below.

**Table 2**

| | | Second processing fluid 1 | Second processing fluid 2 | Second processing fluid 3 | Second processing fluid 4 |
|---|---|---|---|---|---|
| Resin emulsion | JONCRYL 450 | 40.5 | | | |
| | JONCRYL 60 | | 50.0 | | |
| | JONCRYL 352 | | | 37.8 | |
| | VINYBLAN 2684 | | | | 56.7 |
| Polyethylene wax | CHEMIPEARL 400W | 1.0 | 1.0 | 1.0 | 1.0 |
| Defoaming agent | BYK-028 | 0.5 | 0.5 | 0.5 | 0.5 |
| Organic solvent | Diethylene glycol monobutyl ether acetate | 3.0 | 3.0 | 3.0 | 3.0 |
| | Isopropyl alcohol | 20.0 | 20.0 | 20.0 | 20.0 |
| Ion-exchanged water | | 35.0 | 25.5 | 37.7 | 18.8 |
| Total | | 100.0 | 100.0 | 100.0 | 100.0 |
| Acid value (mgKOH/g) | | 40.5 | 107.5 | 20.0 | 0 |

The details of the components contained in the second processing fluid are as follows.
- JONCRYL 60 (anionic functional group: ethyleny unsaturated group, obtained from BASF GmbH, with a non-volatile content of 34% and an acid value of 215 mgKOH/g)
- JONCRYL 352 (anionic functional group: ethyleny unsaturated group, obtained from BASF GmbH, with a non-volatile content of 45% and an acid value of 53 mgKOH/g)
- VINYBLAN 2684 (anionic functional group, ethyleny unsaturated group, obtained from Nissin Chemical C., Ltd., with a non-volatile content of 30% and an acid value of 0 mgKOH/g)

### (Example 1)

### <Fist processing fluid applying step>

The first processing fluid 1 was filled in an inkjet discharging head (obtained from Ricoh Company, Ltd., MH5421MF) and discharged onto OK TOP COAT + (with a basis weight of 157 g/m², coat paper, obtained from Oji Paper Co., Ltd.) serving as a print medium in a manner that the application amount would be 10 g/m², to form a layer formed of the first processing fluid and having a size of 4 cm in width and 10 cm in length at 600 dpi. The ratio of the area on which the first processing fluid was applied was 50% of the entire print medium.

### <First processing fluid drying step>

The print medium on which a layer formed of the first processing fluid 1 was formed by application of the first processing fluid 1 was put in a drying device and dried at 80 degrees C for 2 minutes.

### <Second processing fluid applying step>

Using a bar coater No. 4, the second processing fluid 1 was applied on the region of the dried print medium to which the first processing fluid 1 was applied and on a region of the dried print medium to which the first processing fluid 1 was not applied, in manner that the application amount would be 9.0 g/m².

### <Second processing fluid drying step>

The print medium on which a layer formed of the second processing fluid 1 was formed by application of the second processing fluid 1 was put in a drying device and dried at 80 degrees C for 1 minute, to obtain a printed matter.

### (Examples 2 to 11 and Comparative Examples 1 and 2)

Printed matters were obtained in the same manner as in Example 1, except that unlike in Example 1, the combination of the first processing fluid 1 and the second processing fluid 1 was changed to the combinations of a first processing fluid and a second processing fluid presented in Tables 3 to 6 below.

For the printed matters obtained in Examples 1 to 11 and Comparative Examples 1 and 2, the "gloss value difference" between the region to which the first processing fluid was applied and the region to which the first processing fluid was not applied was evaluated.

### <Gloss value difference>

For the printed matters obtained in Examples 1 to 11 and Comparative Examples 1 and 2, the 60° gloss value L₁ of the region to which the first processing fluid was not applied and the 60° gloss value L₂ of the region to which the first processing fluid was applied were measured using a gloss meter (instrument name: No. 4446 MICRO TRIGLOSS, obtained from Byk-Gardner GmbH). The gloss values of the region to which the first processing fluid was applied and the region to which the first processing fluid was not applied were each an average of measurements obtained at five positions.

The difference between the calculated gloss values L₁ and L₂ was calculated, and the "gloss value difference" was evaluated according to the evaluation criteria described below. C, B, and A are practically usable levels. The evaluation results are presented in Tables 3 to 6.

### [Evaluation criteria]

A: The gloss value difference was 30 or greater.
B: The gloss value difference was 20 or greater but less than 30.
C: The gloss value difference was 10 or greater but less than 20.
D: The gloss value difference was less than 10.

**Table 3**

| | | Ex. 1 | Ex. 2 | Ex. 3 | Ex. 4 | Ex. 5 |
|---|---|---|---|---|---|---|
| First processing fluid | First processing fluid No. | 1 | 1 | 1 | 2 | 3 |
| | Application amount (g/m²) | 10 | 10 | 10 | 10 | 10 |
| | Amount of multivalent metal salt attached (g/m²) | 0.8 | 0.8 | 0.8 | 1.6 | 2.4 |
| Second processing fluid | Second processing fluid No. | 1 | 2 | 3 | 1 | 1 |
| | Application amount (g/m²) | 9 | 9 | 9 | 9 | 9 |
| | Amount of resin component attached (g/m²) | 1.5 | 1.5 | 1.5 | 1.5 | 1.5 |
| | Acid value (mgKOH/g) | 40 | 107.5 | 20 | 40 | 40 |
| Evaluation result | Gloss value L₁ (region to which first processing fluid was not applied) | 55 | 60 | 48 | 55 | 55 |
| | Gloss value L₂ (region to which first processing fluid was applied) | 35 | 20 | 38 | 31 | 27 |
| | Gloss value difference (\|L₁-L₂\|) | 20 | 40 | 10 | 24 | 28 |
| | Evaluation result | B | A | C | B | B |

**Table 4**

| | | Ex. 6 | Ex. 7 | Ex. 8 | Ex. 9 |
|---|---|---|---|---|---|
| First processing fluid | First processing fluid No. | 4 | 5 | 6 | 1 |
| | Application amount (g/m²) | 10 | 10 | 10 | 5 |
| | Amount of multivalent metal salt attached (g/m²) | 0.4 | 0.8 | 1.2 | 0.4 |
| Second processing fluid | Second processing fluid No. | 1 | 1 | 1 | 1 |
| | Application amount (g/m²) | 9 | 9 | 9 | 9 |
| | Amount of resin component attached (g/m²) | 1.5 | 1.5 | 5 | 1.5 |
| | Acid value (mgKOH/g) | 40 | 40 | 40 | 40 |
| Evaluation result | Gloss value L₁ (region to which first processing fluid was not applied) | 55 | 55 | 55 | 55 |
| | Gloss value L₂ (region to which first processing fluid was applied) | 30 | 16 | 13 | 42 |
| | Gloss value difference (\|L₁-L₂\|) | 25 | 39 | 42 | 13 |
| | Evaluation result | B | A | A | C |

**Table 5**

| | | Ex. 10 | Ex. 11 | Ex. 12 | Ex. 13 |
|---|---|---|---|---|---|
| First processing fluid | First processing fluid No. | 8 | 9 | 1 | 1 |
| | Application amount (g/m²) | 10 | 10 | 10 | 10 |
| | Amount of multivalent metal salt attached (g/m²) | 0.3 | 0.8 | 0.8 | 0.8 |
| Second processing fluid | Second processing fluid No. | 1 | 1 | 1 | 1 |
| | Application amount (g/m²) | 9 | 9 | 3 | 15 |
| | Amount of resin component attached (g/m²) | 1.5 | 1.5 | 0.5 | 2.6 |
| | Acid value (mgKOH/g) | 40 | 40 | 40 | 40 |
| Evaluation result | Gloss value L₁ (region to which first processing fluid was not applied) | 55 | 55 | 43 | 65 |
| | Gloss value L₂ (region to which first processing fluid was applied) | 44 | 34 | 30 | 40 |
| | Gloss value difference (\|L₁-L₂\|) | 11 | 21 | 13 | 25 |
| | Evaluation result | C | B | C | B |

**Table 6**

| | | Comp. Ex. 1 | Comp. Ex. 2 |
|---|---|---|---|
| First processing fluid | First processing fluid No. | 6 | 7 |
| | Application amount (g/m²) | 10 | 10 |
| | Amount of multivalent metal salt attached (g/m²) | 1.2 | - |
| Second processing fluid | Second processing fluid No. | 4 | 1 |
| | Application amount (g/m²) | 9 | 9 |
| | Amount of resin component attached (g/m²) | 1.5 | 1.5 |
| | Acid value (mgKOH/g) | 0 | 40 |
| Evaluation result | Gloss value L₁ (region to which first processing fluid was not applied) | 43 | 55 |
| | Gloss value L₂ (region to which first processing fluid was applied) | 41 | 51 |
| | Gloss value difference (\|L₁-L₂\|) | 2 | 4 |
| | Evaluation result | D | D |

## Claims

1. An image printing method, comprising:
applying a first processing fluid containing a multivalent metal salt to a predetermined region of a print medium; and
applying a second processing fluid containing a resin emulsion containing an anionic functional group to the predetermined region of the print medium to which the first processing fluid is applied and any other region of the print medium to which the first processing fluid is not applied,
wherein the area ratio of the predetermined region is 1% or greater but 95% or less relative to the entire print medium, the method further comprising, after the applying the first processing fluid,
applying an ink containing a coloring material to the predetermined region of the print medium to which the first processing fluid is applied and the any other region of the print medium to which the first processing fluid is not applied.

2. The image printing method according to claim 1,
wherein an acid value of the second processing fluid is 20 mgKOH/g or greater but 150 mgKOH/g or less.

3. The image printing method according to any one of claims 1 or 2,
wherein an acid value of the second processing fluid is 40 mgKOH/g or greater but 150 mgKOH/g or less.

4. The image printing method according to any one of claims 1 to 3,
wherein an acid value of the second processing fluid is 100 mgKOH/g or greater but 150 mgKOH/g or less.

5. The image printing method according to any one of claims 1 to 4,
wherein an amount of the multivalent metal salt attached on the predetermined region to which the first processing fluid is applied is 0.4 g/m² or greater.

6. The image printing method according to any one of claims 1 to 5,
wherein an amount of the multivalent metal salt attached on the predetermined region to which the first processing fluid is applied is 0.8 g/m² or greater.

7. The image printing method according to any one of claims 1 to 6,
wherein the multivalent metal salt is calcium acetate.

8. The image printing method according to any one of claims 1 to 7,
wherein an amount ratio (A:B) between an attached amount (A) of the multivalent metal salt contained in the first processing fluid and an attached amount (B) of a resin component of the resin emulsion contained in the second processing fluid is from 1:8 through 8:1.

9. The image printing method according to any one of claims 1 to 8, further comprising
drying either or both of a layer formed of the first processing fluid and a layer formed of the ink.

10. An image printing apparatus (100), comprising:
a processing fluid applying unit (2) configured to apply a first processing fluid containing a multivalent metal salt to a predetermined region of a print medium (1);
a second processing fluid applying unit (6) configured to apply a second processing fluid containing a resin emulsion containing an anionic functional group to the predetermined region of the print medium (1) to which the first processing fluid is applied and any other region of the print medium (1) to which the first processing fluid is not applied; and
an ink applying unit configured to apply an ink containing a coloring material to the predetermined region of the print medium to which the first processing fluid is applied and the any other region of the print medium to which the first processing fluid is not applied,
wherein the area ratio of the predetermined region is 1% or greater but 95% or less relative to the entire print medium.

11. A printed matter (400; 500), comprising:
a print medium (1);
a layer (9) formed of a first processing fluid containing a multivalent metal salt, the layer (9) being on the print medium (1);
another layer (10) formed of a second processing fluid containing a resin emulsion containing an anionic functional group, the another layer (10) being on a predetermined region on which the first processing fluid is present and on any other region on which the first processing fluid is absent, and
an ink containing a coloring material appliued to the predetermined region of the print medium to which the first processing fluid is applied and the any other region of the print medium to which the first processing fluid is not applied.
wherein the area ratio of the predetermined region is 1% or greater but 95% or less relative to the entire print medium.

12. The printed matter (400; 500) according to claim 11,
wherein a difference between a 60° gloss value of the predetermined region on which the first processing fluid is present and a 60° gloss value of the any other region on which the first processing fluid is absent is 10 or greater..

## Patentansprüche

1. Bilddruckverfahren, das Folgendes umfasst:
Aufbringen eines ersten Bearbeitungsfluids, das ein mehrwertiges Metallsalz enthält, auf einen vorbestimmten Bereich eines Druckmediums; und
Aufbringen eines zweiten Bearbeitungsfluids, das eine Harzemulsion enthält, die eine anionische funktionelle Gruppe enthält, auf den vorbestimmten Bereich des Printmediums, auf den das erste Bearbeitungsfluid aufgebracht ist, und einen beliebigen anderen Bereich des Druckmediums, auf den das erste Bearbeitungsfluid nicht aufgebracht ist,
wobei das Flächenverhältnis des vorbestimmten Bereichs 1 % oder größer, aber 95 % oder geringer im Verhältnis zu dem gesamten Druckmedium ist, wobei das Verfahren ferner, nach dem Aufbringen des ersten Bearbeitungsfluids, Folgendes umfasst:
Aufbringen einer Tinte, die ein farbgebendes Material enthält, auf den vorbestimmten Bereich des Druckmediums, auf den das erste Bearbeitungsfluid aufgebracht ist, und den beliebigen anderen Bereich des Druckmediums, auf den das erste Bearbeitungsfluid nicht aufgebracht ist.

2. Bilddruckverfahren nach Anspruch 1,
wobei eine Säurezahl des zweiten Bearbeitungsfluids 20 mg KOH/g oder mehr, aber 150 mg KOH/g oder weniger beträgt.

3. Bilddruckverfahren nach Anspruch 1 oder 2,
wobei eine Säurezahl des zweiten Bearbeitungsfluids 40 mg KOH/g oder mehr, aber 150 mg KOH/g oder weniger beträgt.

4. Bilddruckverfahren nach einem der Ansprüche 1 bis 3,
wobei eine Säurezahl des zweiten Bearbeitungsfluids 100 mg KOH/g oder mehr, aber 150 mg KOH/g oder weniger beträgt.

5. Bilddruckverfahren nach einem der Ansprüche 1 bis 4,
wobei eine Menge des mehrwertigen Metallsalzes, das an dem vorbestimmten Bereich angebracht wird, auf den das erste Bearbeitungsfluid aufgebracht ist, 0,4 g/m² oder mehr beträgt.

6. Bilddruckverfahren nach einem der Ansprüche 1 bis 5,
wobei eine Menge des mehrwertigen Metallsalzes, das an dem vorbestimmten Bereich angebracht wird, auf den das erste Bearbeitungsfluid aufgebracht ist, 0,8 g/m² oder mehr beträgt.

7. Bilddruckverfahren nach einem der Ansprüche 1 bis 6,
wobei das mehrwertige Metallsalz Kalziumacetat ist.

8. Bilddruckverfahren nach einem der Ansprüche 1 bis 7,
wobei ein Mengenverhältnis (A:B) zwischen einer angebrachten Menge (A) des mehrwertigen Metallsalzes, das in dem ersten Bearbeitungsfluid enthalten ist, und einer angebrachten Menge (B) einer Harzkomponente der Harzemulsion, die in dem zweiten Bearbeitungsfluid enthalten ist, 1:8 bis 8:1 beträgt.

9. Bilddruckverfahren nach einem der Ansprüche 1 bis 8, das ferner Folgendes umfasst:
Trocknen einer oder beider von einer Lage, die aus dem ersten Bearbeitungsfluid gebildet ist, und einer Lage, die aus der Tinte gebildet ist.

10. Bilddruckvorrichtung (100), die Folgendes umfasst:
eine Bearbeitungsfluid-Aufbringungseinheit (2), die dafür konfiguriert ist, ein erstes Bearbeitungsfluid, das ein mehrwertiges Metallsalz enthält, auf einen vorbestimmten Bereich eines Druckmediums (1) aufzubringen;
eine zweite Bearbeitungsfluid-Aufbringungseinheit (6), die dafür konfiguriert ist, ein zweites Bearbeitungsfluid, das eine Harzemulsion enthält, die eine anionische funktionelle Gruppe enthält, auf den vorbestimmten Bereich des Druckmediums (1), auf den das erste Bearbeitungsfluid aufgebracht ist, und einen beliebigen anderen Bereich des Druckmediums (1), auf den das erste Bearbeitungsfluid nicht aufgebracht ist, aufzubringen; und
eine Tintenaufbringungseinheit, die dafür konfiguriert ist, eine Tinte, die ein farbgebendes Material enthält, auf den vorbestimmten Bereich des Druckmediums, auf den das erste Bearbeitungsfluid aufgebracht ist, und den beliebigen anderen Bereich des Druckmediums, auf den das erste Bearbeitungsfluid nicht aufgebracht ist, aufzubringen,
wobei das Flächenverhältnis des vorbestimmten Bereichs 1 % oder größer, aber 95 % oder geringer im Verhältnis zu dem gesamten Druckmedium ist.

11. Druckerzeugnis (400; 500), das Folgendes umfasst:
ein Druckmedium (1);
eine Lage (9), die aus einem ersten Bearbeitungsfluid gebildet ist, das ein mehrwertiges Metallsalz enthält, wobei sich die Lage (9) auf dem Druckmedium (1) befindet;
eine andere Lage (10), die aus einem zweiten Bearbeitungsfluid gebildet ist, das eine Harzemulsion enthält, die eine anionische funktionelle Gruppe enthält, wobei sich die andere Lage (10) auf einem vorbestimmten Bereich, auf dem das erste Bearbeitungsfluid vorhanden ist, und auf einem beliebigen anderen Bereich, auf dem das erste Bearbeitungsfluid nicht vorhanden ist, befindet, und
eine Tinte, die ein farbgebendes Material enthält, die auf den vorbestimmten Bereich des Druckmediums, auf den das erste Bearbeitungsfluid aufgebracht ist, und den beliebigen anderen Bereich des Druckmediums, auf den das erste Bearbeitungsfluid nicht aufgebracht ist, aufgebracht ist,
wobei das Flächenverhältnis des vorbestimmten Bereichs 1 % oder größer, aber 95 % oder geringer im Verhältnis zu dem gesamten Druckmedium ist.

12. Druckerzeugnis (400; 500) nach Anspruch 11,
wobei eine Differenz zwischen einem 60°-Glanzwert des vorbestimmten Bereichs, auf dem das erste Bearbeitungsfluid vorhanden ist, und einem 60°-Glanzwert des beliebigen anderen Bereichs, auf dem das erste Bearbeitungsfluid nicht vorhanden ist, 10 oder mehr beträgt.

## Revendications

1. Procédé d'impression d'images, comprenant :
l'application d'un premier fluide de traitement contenant un sel métallique multivalent sur une région prédéterminée d'un support d'impression ; et
l'application d'un deuxième fluide de traitement contenant une émulsion de résine contenant un groupe fonctionnel anionique sur la région prédéterminée du support d'impression sur laquelle le premier fluide de traitement est appliqué et sur une quelconque autre région du support d'impression sur laquelle le premier fluide de traitement n'est pas appliqué,
dans lequel le rapport de surface de la région prédéterminée représente 1 % ou plus, mais 95 % ou moins par rapport à l'ensemble du support d'impression, le procédé comprenant en outre, après l'application du premier fluide de traitement :
l'application d'une encre contenant un matériau colorant sur la région prédéterminée du support d'impression, sur laquelle le premier fluide de traitement est appliqué et la quelconque autre région du support d'impression sur laquelle le premier fluide d traitement n'est pas appliqué.

2. Procédé d'impression d'images selon la revendication 1,
dans lequel un indice d'acide du deuxième fluide de traitement est de 20 mg KOH/g ou plus, mais de 150 mg KOH/g ou moins.

3. Procédé d'impression d'images selon l'une quelconque des revendications 1 ou 2,
dans lequel un indice d'acide du deuxième fluide de traitement est de 40 mg KOH/g ou plus, mais de 150 mg KOH/g ou moins.

4. Procédé d'impression d'images selon l'une quelconque des revendications 1 à 3,
dans lequel un indice d'acide du deuxième fluide de traitement est de 100 mg KOH/g ou plus, mais de 150 mg KOH/g ou moins.

5. Procédé d'impression d'images selon l'une quelconque des revendications 1 à 4,
dans lequel une quantité du sel métallique multivalent attachée sur la région prédéterminée sur laquelle le premier fluide de traitement est appliqué est de 0,4 g/m² ou plus.

6. Procédé d'impression d'images selon l'une quelconque des revendications 1 à 5,
dans lequel une quantité du sel métallique multivalent attachée sur la région prédéterminée sur laquelle le premier fluide de traitement est appliqué est de 0,8 g/m² ou plus.

7. Procédé d'impression d'images selon l'une quelconque des revendications 1 à 6,
dans lequel le sel métallique multivalent est l'acétate de calcium.

8. Procédé d'impression d'images selon l'une quelconque des revendications 1 à 7,
dans lequel un rapport de quantité (A : B) entre une quantité attachée (A) du sel métallique multivalent contenue dans le premier fluide de traitement et une quantité attachée (B) d'un composant de résine de l'émulsion de résine contenue dans le deuxième fluide de traitement est compris entre 1 : 8 et 8 : 1.

9. Procédé d'impression d'images selon l'une quelconque des revendications 1 à 8, comprenant en outre:
le séchage de l'une ou des deux d'une couche formée du premier fluide de traitement et d'une couche formée de l'encre.

10. Appareil d'impression d'images (100), comprenant :
une unité d'application de fluide de traitement (2) configurée pour appliquer un premier fluide de traitement contenant un sel métallique multivalent sur une région prédéterminée d'un support d'impression (1) ;
une deuxième unité d'application de fluide de traitement (6), configurée pour appliquer un deuxième fluide de traitement contenant une émulsion de résine contenant un groupe fonctionnel anionique sur la région prédéterminée du support d'impression (1) sur laquelle le premier fluide de traitement est appliqué et une quelconque autre région du support d'impression (1) sur laquelle le premier fluide de traitement n'est pas appliqué ; et
une unité d'application d'encre configurée pour appliquer une encre contenant un matériau colorant sur la région prédéterminée du support d'impression sur laquelle le premier fluide de traitement est appliqué et sur la quelconque autre région du support d'impression sur laquelle le premier fluide de traitement n'est pas appliqué ;
dans lequel le rapport de surface de la région prédéterminée représente 1 % ou plus, mais 95 % ou moins par rapport à l'ensemble du support d'impression.

11. Imprimé (400, 500), comprenant :
un support d'impression (1) ;
une couche (9) formée d'un premier fluide de traitement contenant un sel métallique multivalent, la couche (9) étant située sur le support d'impression (1) ;
une autre couche (10) formée d'un deuxième fluide de traitement contenant une émulsion de résine contenant un groupe fonctionnel anionique, l'autre couche (10) étant située sur une région prédéterminée sur laquelle le premier fluide de traitement est présent et une quelconque autre région de laquelle le premier fluide de traitement est absent, et
une encre contenant un matériau colorant appliquée sur la région prédéterminée du support d'impression sur laquelle le premier fluide de traitement est appliqué et la quelconque autre région du support d'impression sur laquelle le premier fluide de traitement n'est pas appliqué,
dans lequel le rapport de surface de la région prédéterminée représente 1 % ou plus, mais 95 % ou moins par rapport à l'ensemble du support d'impression.

12. Imprimé (400, 500) selon la revendication 11,
dans lequel une différence entre une valeur de brillance de 60° de la région prédéterminée sur laquelle le premier fluide de traitement est présent et une valeur de brillance de 60° de la quelconque autre région de laquelle le premier fluide de traitement est absent est de 10 ou plus.
